Europäisches Patentamt

European Patent Office

Office européen des brevets

(19)

(11) **EP 1 249 711 B1**

(12) **EUROPÄISCHE PATENTSCHRIFT**

(45) Veröffentlichungstag und Bekanntmachung des Hinweises auf die Patenterteilung:
**30.08.2006 Patentblatt 2006/35**

(51) Int Cl.:
*G01S 3/782* (2006.01)    *G01S 1/70* (2006.01)
*B60Q 1/52* (2006.01)

(21) Anmeldenummer: **02007590.9**

(22) Anmeldetag: **03.04.2002**

(54) **Vorrichtung zum Erkennen einer Kollisionsgefahr zwischen zwei sich relativ zueinander bewegenden Objekten, insbesondere Fahrzeugen**

Device for detecting a danger of collision between two objects, in particular vehicles, in motion relative to each other

Dispositif pour détecter la possibilité d'une collision entre deux objets, en particulier des véhicules, qui se déplacent l'un par rapport à l'autre

(84) Benannte Vertragsstaaten:
**AT BE CH CY DE DK ES FI FR GB GR IE IT LI LU MC NL PT SE TR**
Benannte Erstreckungsstaaten:
**AL LT LV MK RO SI**

(30) Priorität: **09.04.2001 DE 10117694**

(43) Veröffentlichungstag der Anmeldung:
**16.10.2002 Patentblatt 2002/42**

(73) Patentinhaber: **Marinitsch, Waldemar**
**D-81675 München (DE)**

(72) Erfinder:
• **Marinitsch, Waldemar**
**81675 München (DE)**

• **Fasshauer, Peter, Dr.**
**85579 Neubiberg (DE)**

(74) Vertreter: **Wilhelms . Kilian & Partner**
**Patentanwälte**
**Eduard-Schmid-Strasse 2**
**81541 München (DE)**

(56) Entgegenhaltungen:
**EP-A- 0 355 490         EP-A- 0 952 459**
**DE-A- 3 120 112         DE-A- 3 700 009**
**DE-A- 19 512 681         US-A- 5 819 008**
**US-A- 6 142 252**

**Beschreibung**

Die Erfindung betrifft eine Vorrichtung zum Erkennen einer Kollisionsgefahr zwischen zwei sich relativ zueinander bewegenden Objekten, bei der an jedem Objekt eine Sendeanordnung zum Aussenden einer optischen Strahlung im infraroten oder sichtbaren Bereich in alle Richtungen und eine Empfangsanordnung für diese optische Strahlung angebracht sind.

Eine derartige Vorrichtung ist aus der US-A-5,819,008 bekannt.

Aus der EP-A-0 952 459 ist eine weitere Vorrichtung zum Erkennen einer Kollisionsgefahr eines Objektes mit anderen Objekten bekannt, bei der an dem Objekt, beispielsweise einem Fahrzeug, eine Sendeanordnung für eine optische Strahlung vorgesehen ist, mit der das Umfeld des Objektes überwacht wird, und die beim Auftreffen auf einen Gegenstand im Umfeld rückreflektiert und von einer am Objekt angebrachten Empfangsanordnung empfangen wird. Aus dieser Reflektion wird auf eine Kollisionsgefahr geschlossen. Bei dieser Vorrichtung handelt es sich nicht um eine interaktiv arbeitende Vorrichtung, bei der mehrere sich bewegende Objekte miteinander kommunizieren können.

Eine Vorrichtung der eingangs genannten Art dient dazu, sich relativ zueinander bewegende Objekte vor einer Kollision zu schützen, indem vorzeitig und automatisch eine Kollisionsgefahr erkannt wird und die entsprechenden Gegenmaßnahmen getroffen werden.

Insbesondere im Bereich der industriellen Produktionsanlagen verkehren nämlich auf dem Werksgelände sowie in Lager- oder Produktionshallen Fahrzeuge unterschiedlicher Art, die unter anderem zum Transport von Bau- und Fertigungsteilen eingesetzt werden. Dabei handelt es sich um Gabelstapler oder ähnlich Fahrzeuge. Beim Einsatz dieser Fahrzeuge besteht stets eine gewisse Kollisionsgefahr, und zwar der Fahrzeuge untereinander sowie der Fahrzeuge gegenüber feststehenden Baukörpern innerhalb dieser Bereiche. Zahlreiche zum Teil schwere Unfälle sind jährlich auf derartige Kollisionen zurückzuführen.

Die der Erfindung zugrundeliegende Aufgabe besteht darin, eine Vorrichtung der eingangs genannten Art anzugeben, mit der es möglich ist, automatisch und frühzeitig eine Kollisionsgefahr zu erkennen.

Diese Aufgabe wird gemäß der Erfindung durch die Ausbildung gelöst, die im Anspruch 1 angegeben ist.

Bevorzugte Weiterbildungen und Ausgestaltungen der erfindungsgemäßen Vorrichtung sind Gegenstand der Patentansprüche 2 bis 5.

Im Folgenden werden anhand der zugehörigen Zeichnung besonders bevorzugte Ausführungsbeispiele der Erfindung näher beschrieben. Es zeigen

Fig. 1 in einer schematischen Darstellung eine Situation, in der die Gefahr einer Kollision zweier Fahrzeuge besteht,

Fig. 2 die in Figur 1 dargestellten Fahrzeuge und ihre Relativbewegungen im Koordinatensystem eines der Fahrzeuge,

Fig. 3 das Blocksschaltbild einer Sensoranordnung mit einem optischen Sender, optischen Empfängern und einem Signalverarbeitungsteil bei einem Ausführungsbeispiel der erfindungsgemäßen Vorrichtung,

Fig. 4 die Strahlungscharakteristik des optischen Senders bei der in Fig. 3 dargestellten Vorrichtung,

Fig. 5 die Empfangscharakteristik von vier orthogonalen Photodiodenfeldern bei der in Fig. 3 dargestellten Vorrichtung,

Fig. 6 die Anordnung von Sendedioden zur Erzielung einer konstanten Strahlungsintensitätsverteilung bei der in Fig. 3 dargestellten Vorrichtung,

Fig. 7a die orthogonale Anordnung der Photodioden eines optischen Empfängers bei der in Fig. 3 dargestellten Vorrichtung,

Fig. 7b ein Ausführungsbeispiel eines Photodiodenfeldes aus mehreren Einzeldioden,

Fig. 8a den zeitlichen Verlauf des Sendesignals zum Modulieren einer Leuchtdiode oder Laserdiode für die in Fig. 3 dargestellte Vorrichtung,

Fig. 8b die Ausgangsimpulse eines Transimpedanzverstärkers bei der in Fig. 3 dargestellten Vorrichtung und

Fig. 9 das elektrische Schaltbild eines optischen Empfängers aus Photodiodenfeldern und Transimpedanzverstärker bei der in Fig. 3 dargestellten Vorrichtung.

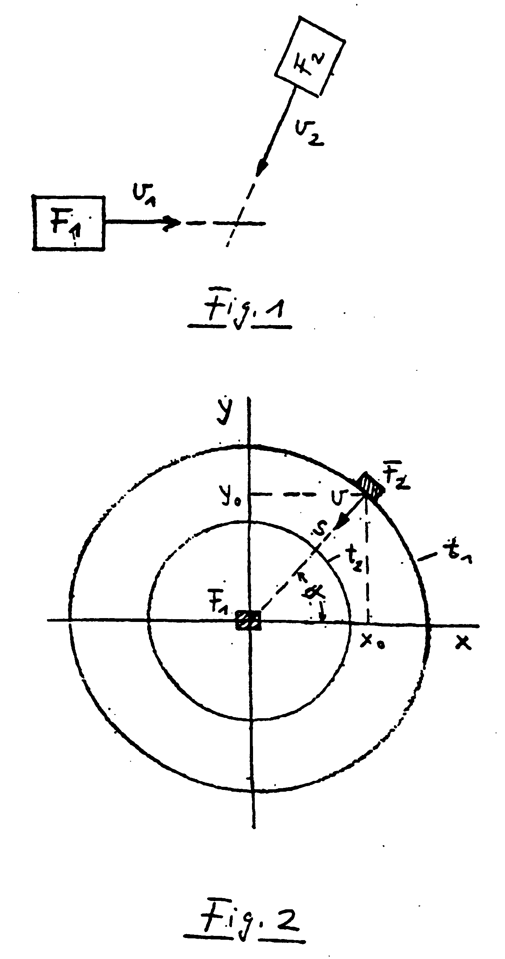

Im Folgenden wird zunächst anhand der Fig. 1 und 2 die Situation dargestellt und analysiert, in der eine Kollisionsgefahr beispielsweise zwischen zwei Fahrzeugen F1 und F2 besteht, die sich mit Absolutgeschwindigkeiten v1 und v2 aufeinander zu bewegen.

Dazu wird gemäß Fig. 2 das in Fig. 1 dargestellte Fahrzeug F1 als ruhend angenommen, so dass sich das Fahrzeug F2 im Koordinatensystem des ruhenden Fahrzeuges F1 mit einer relativen Annäherungsgeschwindigkeit v=v1-v2 auf das Fahrzeug F1 zu bewegt. Eine weitere Annahme besteht darin, dass beide Fahrzeuge nahezu punktförmig sind, das heißt mit sehr kleinen Abmessungen angenommen werden. Die tatsächlichen Fahrzeuggrößen werden in der Praxis dann über entsprechende Toleranzen berücksichtigt.

Die Relativgeschwindigkeit v zwischen beiden Fahrzeugen F1 und F2 ist ein Vektor, der als komplexe Größe wie folgt darstellbar ist:

$$v = V \exp(j\Phi) \qquad (1)$$

Wenn das Fahrzeug F2 gegenüber dem Fahrzeug F1, dass heißt in dessen Koordinatensystem die Positionskoordinaten x0 und y0 hat, ergibt sich der Abstand s zwischen beiden Fahrzeugen F1 und F2 als:

$$s = (x0^2 + y0^2)^{1/2} \qquad (2)$$

Gemäß Fig. 2 ist ersichtlich, dass eine Kollisionsgefahr dann besteht, wenn der Winkel $\Phi$ des Geschwindig-keitsvektors v dem durch x0 und y0 vorgegebenen Winkel:

$$\alpha = \arctan y0/x0 \qquad (3)$$

entspricht, das heißt, wenn $\alpha = \Phi$ ist und der Abstand s unter Beibehaltung von $\Phi$ kleiner wird. Das bedeutet, dass bei einer Entfernung s1 zu einem Zeitpunkt tl und einem Winkel $\alpha$1 zu einem Zeitpunkt t2>t1 die Bedingungen für eine Kollisionsgefahr lauten:

$$s2(t2) < s1(t1) \quad \text{und} \quad \alpha2(t2) = \alpha1(t1) \qquad (4)$$

mit $\Delta t = t2-t1$; $\Delta s = s2-s1$ und $\Delta\alpha = \alpha^2-\alpha^1$ lässt sich die Gleichung (4) schreiben als:

$$V = \Delta s/\Delta t < 0 \quad \text{und} \quad \Delta\alpha/\Delta t = 0 \qquad (5)$$

$\Delta\alpha/\Delta t$ ist dabei die Winkelgeschwindigkeit von Fahrzeug F2 in Bezug auf Fahrzeug F1.

Um daher laufend die Kollisionsgefahr zu überwachen und zu erkennen, folgt aus den Gleichungen (4) und (5), dass der Abstand s und der Positionswinkel $\alpha$ zwischen beiden Fahrzeugen F1 und F2 laufend gemessen und bestimmt werden muss. Es ist weiterhin zu berücksichtigen, dass aus der Erkennung einer Kollisionsgefahr spätestens dann Konsequenzen gezogen werden müssen, beispielsweise Bremsvorgänge eingeleitet werden müssen, wenn bei grundsätzlich gegebener Kollisionsgefahr eine Minimalentfernung smin zwischen beiden Fahrzeugen erreicht ist, die beispielsweise der Bremsstrecke:

$$s_{min} = V^2/2b \qquad (6)$$

entspricht, wobei b die Bremsverzögerung des Fahrzeuges F2 bedeutet.

Im Obigen wurde die Situation aus der Sicht des Fahrzeuges F1 dargelegt, das als ruhend angesehen wurde. Die gleiche Sichtweise ergibt sich natürlich auch vom Standpunkt des Fahrzeuges F2, wenn dieses mit seinem Koordinatensystem als ruhend angesehen wird und die Bewegung des Fahrzeuges F1 im Koordinatensystem des Fahrzeuges F2 betrachtet wird. Alle getroffenen Feststellungen gelten daher indentisch für beide Fahrzeuge.

Für ein Verfahren und eine Vorrichtung zum Erkennen einer Kollisionsgefahr, die nach dem obigen Prinzip arbeiten, gilt daher, dass laufend der Abstand und der Positionswinkel der Fahrzeuge zueinander gemessen werden muss und dass weiterhin die Relativgeschwindigkeit und die Winkelgeschwindigkeit bestimmt werden sollten.

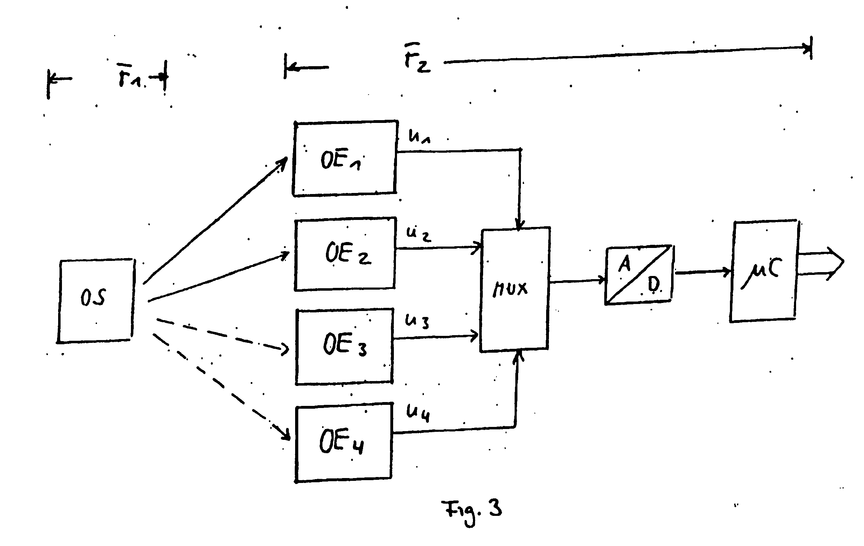

Ein bevorzugtes Ausführungsbeispiel, mit dem dieses bei hoher Zuverlässigkeit möglich ist und das mit geringen Kosten realisierbar ist, ist ein optisches System, das im Infrarotbereich arbeitet und in der in Fig. 3 dargestellten Weise aus Sende- und Empfangseinrichtungen in Form von Leucht- bzw. Photodioden an jedem Fahrzeug jeweils besteht. Die in Fig. 3 dargestellte Situation zeigt den Fall, dass beispielsweise ein optischer Sender OS im Fahrzeug F1 eine Strahlung, beispielsweise eine optische Strahlung im infrarotem Bereich, ausgibt, die von Empfängern im Fahrzeug F2 empfangen wird. Es ist aber auch eine Ausbildung möglich, die mit einer optischen Strahlung im sichtbaren Bereich arbeitet.

Wie es in Fig. 3 dargestellt ist, wird die Strahlung des optischen Senders OS im Fahrzeug F1 von den Empfängern OE1 bis OE4 im Fahrzeug F2 empfangen und in ein entsprechendes Ausgangsspannungssignal u1 bis u4 umgewandelt. Diese Ausgangssignale u1 bis u4 liegen an einem Multiplexer MUX, dem ein Analogdigitalwandler nachgeschaltet ist, dessen Ausgangssignal an einem Mikrocontroller $\mu$C liegt, der die Auswertung der Signale vornimmt und entsprechende Steuersignale erzeugt.

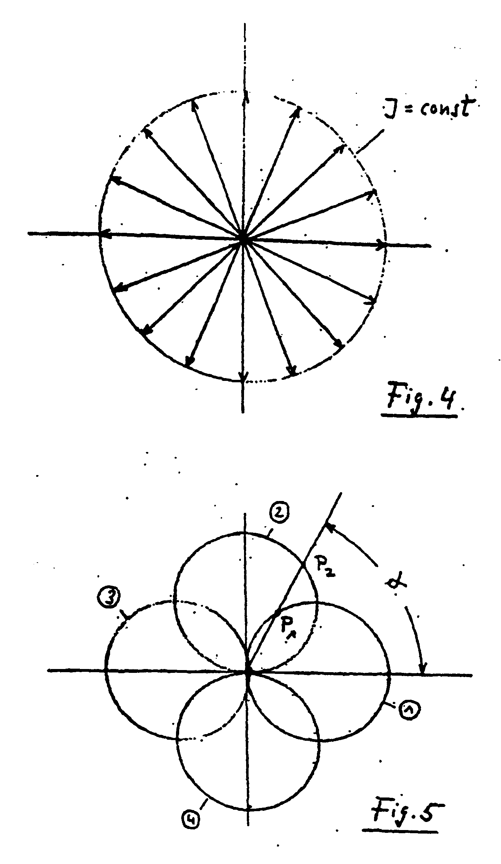

Da die Positionswinkel zwischen den Fahrzeugen F1 und F2 grundsätzlich zwischen 0° und 360° liegen können, muss der optische Sender OS eine möglichst winkelunabhängige Fernfeldverteilung, dass heißt eine konstante Strahlungsstärke I haben, wie es in Fig. 4 dargestellt ist. Das heißt, dass die Fahrzeuge F1 und F2 über ihre optischen Sender OS in alle Richtungen die gleiche Lichtleistung abstrahlen.

Um an dem die Strahlung empfangenen Fahrzeug den Abstand zwischen den Fahrzeugen und den Positionswinkel des sendenden Fahrzeuges zu ermitteln, ist die in Fig. 5 dargestellte Anordnung aus vier orthogonal zueinander angeordneten optischen Empfängern OE1 bis OE4 mit jeweils kreisförmiger Empfangscharakteristik 1 bis 4 vorgesehen, die ein System bilden, mit dem Informationen über den Abstand s und den Positionswinkel $\alpha$ in Verbindung mit der Strahlungscharakteristik des optischen Senders OS gewonnen werden können.

Vorzugsweise ist jedem Quadranten des Koordinatensystems ein Paar von optische Empfängern, beispielsweise das Empfängerpaar OE1 und OE2 zugeordnet. Die Ausgangsspannung der optischen Empfänger ist proportional zur zugehörigen Empfangscharakteristik. Die von dem sendenden Fahrzeug unter dem Positionswinkel $\alpha$ kommende Strahlung führt somit zu Ausgangsspannungen u1 und u2 der Empfänger OE1 und OE2, die den Punkten P1 und P2 in Fig. 5 entsprechen und aus denen aufgrund der folgenden Beziehungen:

$$u1 = C \cos \alpha/s^2 \quad und \quad u2 = C \sin\alpha/s^2 \qquad (7)$$

die erforderlichen Informationen über den Abstand den Fahrzeuge und den Positionswinkel gebildet werden können, da C eine Konstante ist.

Die Gleichung (7) folgt aus dem quadratischen Entfernungsgesetz und der kreisförmigen Empfangscharakteristik der Empfänger, die in Fig. 5 dargestellt ist. Diese entspricht analog der Charakteristik eines Lambertschen Strahlers falls flächenhafte optische Empfangselemente wie beispielsweise planare Photodioden oder Photodiodenfelder verwandt werden.

Aus Gleichung (7) ergibt sich als relevante Information im ersten Quadranten für s und $\alpha$:

$$s = C^{1/2}/(u1^2+u2^2)^{1/4} \quad und \quad \alpha = \arctan(u2/u1) \qquad (8)$$

Analog hierzu werden diese Größen für die anderen Quadranten gebildet. Die vier Ausgangsspannungen u1 bis u4 gehen über den Multiplexer MUX und den Analogdigitalwandler in Fig. 3 zum Mikrocontroller $\mu$C, der die in Gleichung 8 angegebenen Größen berechnet und nach den Kriterien der Gleichungen 4, 5 und 6 eine Kollisionsgefahr meldet bzw. ein entsprechendes Brems- oder Stopsignal erzeugt.

Der oben beschriebene Grundaufbau der erfindungsgemäßen Vorrichtung wird im folgenden mehr im einzelnen beschrieben.

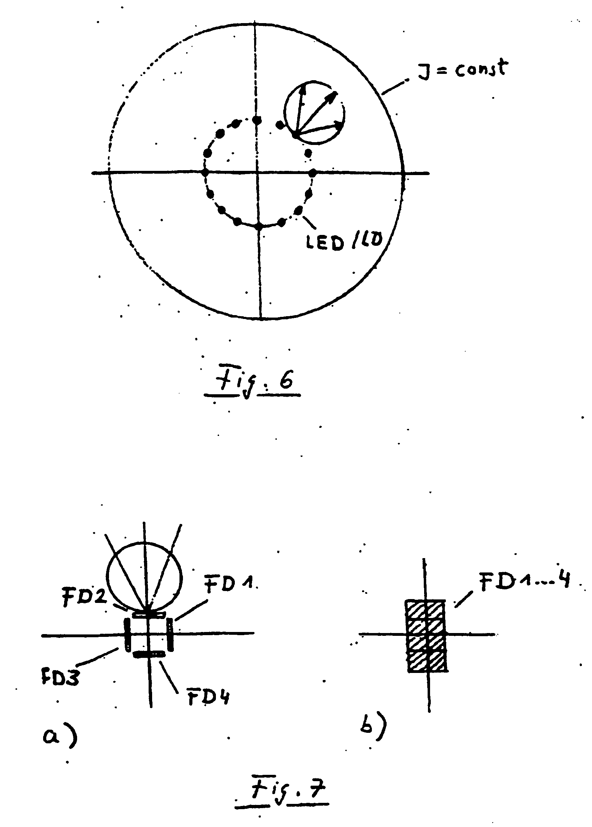

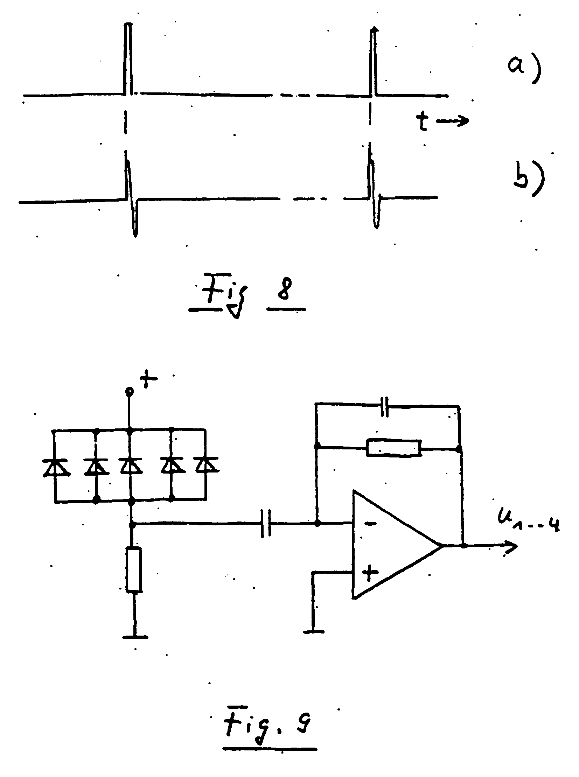

Wie es in Fig. 6 dargestellt ist, besteht der optische Sender aus einer Reihe kreisförmig angeordneter Infrarotleuchtdioden LED oder Laserdioden LD, die jeweils eine bestimmte Abstrahlcharakteristik haben. Bei einfachen und daher kostengünstigen Leuchtdioden entspricht diese der kreisförmigen Charakteristik eines Lambertstrahlers, wie es in Fig. 6 dargestellt ist. Falls alle Dioden auf eine gleich große und konstante Lichtleistung geregelt werden, ergibt sich dann durch Überlagerung aller Einzelcharakteristiken im Fernfeld eine konstante Strahlungsstärkeverteilung I = const. Dabei werden alle Sendedioden mit dem beispielsweise in Fig. 8a dargestellten impulsförmigen Signal moduliert, wodurch in vorteilhafter Weise sehr hohe Spitzenleistungen infolge eines geringen Impuls/Pause- oder Tastverhältnisses erzielt werden können. Ein weiterer Vorteil dieser Modulation besteht darin, dass den einzelnen Fahrzeugen nur ein sehr kurzer Zeitschlitz zugeordnet wird, wodurch auch weitere kollisionsgefährdende Fahrzeuge in der Zeit außerhalb der Sendeimpulse erfasst werden können. Ein typisches Tastverhältnis liegt beispielsweise bei 0,5 %. Dadurch können in den Sendedioden sehr hohe Spitzenleistungen erreicht werden, wodurch hohe Signalrauschverhältnisse bezogen auf die empfangenen Impulsamplituden entstehen. Das ist vorteilhaft gegenüber einwirkenden Störsignalen wie beispielsweise dem durch Fremdlicht verursachten Rauschen in den optischen Empfängern.

Die Ausbildung des Empfangssystems von Fig. 5 mit den notwendigen Charakteristiken im einzelnen ist in Fig. 7 dargestellt. Fig. 7a zeigt vier jeweils vorzugsweise im rechten Winkel zueinander angeordnete planare Photodioden oder Photodiodenfelder, die gemäß Fig. 7b aus mehreren Einzeldioden bestehen können. Jeder optische Teilempfänger hat die erforderliche kreisförmige Lambertcharakteristik von Fig. 5. Ein Feld aus mehreren Einzeldioden hat dabei den Vorzug einer sehr kostengünstigen Realisierung des optischen Empfängers.

Ein bedeutender Gesichtspunkt ist dabei die Größe der verwendeten Empfangsfläche des optischen Empfängers oder Wandlers. Grundsätzlich wird ein umso größeres Signalrauschverhältnis und damit eine umso größere überbrückbare Entfernung zu den Fahrzeugen erzielt, je größer diese Empfangsfläche ist. Dem sind jedoch insofern Grenzen gesetzt, als bei wachsender Fläche der Photodioden auch deren Sperrschichtkapazität ansteigt. Um eine möglichst große Fläche zu realisieren, sollten daher die Photodioden mit einem sehr niederohmigen Transimpedanzverstärker gekoppelt werden, der den in Fig. 9 dargestellten Aufbau hat, so dass der Einfluß der hohen Kapazität kompensiert wird. Dadurch lassen sich dann relativ großflächige Diodenfelder betreiben, die wiederum zu hohen Signalrauschverhältnissen führen und damit einen sicheren Betrieb in der Praxis gewährleisten. In Fig. 9 ist als Beispiel ein Photodiodenfeld dargestellt, das aus fünf Photodioden besteht.

Fig. 8b zeigt schließlich die Ausgangsimpulse des oben beschriebenen Aufbaus, deren Spitzenwerte dann in der angeschlossenen digitalen Signalverarbeitungseinheit gemäß Fig. 3 nach den Algorithmen der Gleichungen 4, 5, 6 und 8 verarbeitet werden. Das Zeitintervall $\Delta t$ ist dabei beispielsweise durch die Pulsperiode der Sendesignale vorgegeben.

Die oben beschriebenen Anordnungen sind identisch an allen fraglichen Objekten oder Fahrzeugen vorgesehen, so dass an jedem Fahrzeug der Außenraum auf Kollisionsgefahren überwacht werden kann. Lediglich bei feststehenden Baukörpern erübrigt sich die Empfangsanordnung mit nachgeschalteter Auswerteeinheit, hier reicht es aus, entsprechende optische Sender vorzusehen.

Im Obigen wurden Ausführungsbeispiele des erfindungsgemäßen Verfahrens und der erfindungsgemäßen Vorrichtung beschrieben, die zum Erkennen einer Kollisionsgefahr zwischen zwei sich in derselben Ebene bewegenden Fahrzeugen, das heißt zweidimensional bestimmt sind. Entsprechende Ausbildungen sind ohne weiteres auch für den dreidimenionalen Fall, das heißt zum Erkennen einer Kollisionsgefahr zwischen Fahrzeugen möglich, die sich im dreidimensionalen Raum bewegen. Hierzu ist es beispielsweise lediglich notwendig, statt kreisförmigen Strahlungscharakteristiken der optischen Strahler entsprechende kugelförmige Strahlungscharakteristiken vorzusehen und statt vier optischen Empfängern, wie es in Fig. 7a dargestellt ist, an der Ober- und Unterseite zwei weitere optische Empfänger, das heißt insgesamt sechs optische Empfänger mit kugelförmiger Empfangscharakteristik vorzusehen. Die zu lösenden Gleichungen zur Ermittlung der Positionswinkel und des Abstandes haben dann drei Unbekannte, die analog zur Gleichung (7) aus Ausgangsspannungen drei Empfängern ermittelt werden können, die die Strahlung des sendenden Fahrzeuges im dreidimensionalen Raum empfangen.

### Patentansprüche

1.  Vorrichtung zum Erkennen einer Kollisionsgefahr zwischen wenigstens zwei sich relativ zueinander bewegenden Objekten, bei der an jedem Objekt eine Sendeanordnung zum Aussenden einer optischen Strahlung im infraroten oder sichtbaren Bereich in alle Richtungen und eine Empfangsanordnung für diese optische Strahlung angebracht sind, **dadurch gekennzeichnet, dass**

    - die an jedem Objekt angebrachte Empfangsanordnung für jeden Quadranten des Koordinatensystems des Objektes aus wenigstens zwei planaren Empfängern besteht, die unter einem bestimmten Winkel zueinander angeordnet sind,
    - an jedem Objekt eine Steuerung vorgesehen ist, die die Empfangsanordnung in zeitlichen Abständen aktiviert, und
    - an jedem Objekt ein Signalprozessor vorgesehen ist, der aus den Ausgangssignalen der Empfangsanordnung basierend auf deren Empfangscharakteristik den Abstand der Objekte und den Positionswinkel der Objekte berechnet und bei zeitlich konstantem Positionswinkel und bei abnehmenden Abstand der Objekte ein Kollisionssignal erzeugt,
    - die von der Sendeanordnung eines Objektes (F1) ausgesandte optische Strahlung von der Empfangsanordnung eines anderen Objektes (F2) empfangen und ausgewertet wird.

2.  Vorrichtung nach Anspruch 1, **dadurch gekennzeichnet, dass** die Sendeanordnung und die Empfänger der Empfangsanordnung jeweils kreis- bzw. kugelförmige Charakteristiken haben.

**3.** Vorrichtung nach Anspruch 1 oder 2, **dadurch gekennzeichnet, dass** die Sendeanordnungen aus Leuchtdioden und die Empfangsanordnungen aus Photodioden bestehen.

**4.** Vorrichtung nach einem der Ansprüche 1 bis 3, **gekennzeichnet durch** ein niedriges Aktivierungstastintervall für die Sendeanordnung.

**5.** Vorrichtung nach Anspruch 4, **dadurch gekennzeichnet, dass** das Aktivierungstastintervall bei etwa 0,5 % liegt.

**Claims**

**1.** A device for detecting a danger of collision between two objects, in particular vehicles, in motion relative to each other with which at each object there are provided a transmitting arrangement for transmitting an optical radiation in all directions and a receiving arrangement for this optical radiation **characterized in that**

- the receiving arrangement provided at each object consists of at least two planar receivers which are arranged with a certain angle relative to each other,
- at each object control means is provided which activates the receiving arrangement in intervals and
- at each object a signal processing means is provided which calculates the distance of the objects and the position angle of the objects from the output signals of the receiving arrangement on the basis of the receiving characteristic thereof and which generates a collision signal if the position angle is constant over the time and the distance of the objects decreases,
- the optical radiation transmitted by the transmitting arrangement of one object (F1) is received and evaluated by the receiving arrangement of another object (F2).

**2.** A device as claimed in claim 1, **characterized in that** the transmitting arrangement and the receiver of the receiving arrangement have a circular respectively spherical characteristic.

**3.** A device as claimed in claim 1 or 2, **characterized in that** the transmitting arrangement consists of light emitting devices and the receiving arrangement consists of photodiodes.

**4.** A device as claimed in one of the claims 1 to 3, **characterized by** a low activation sample interval for the transmitting arrangement.

**5.** A device as claimed by claim 4, **characterized in that** the activation sample interval amounts to about 0.5 %.

**Revendications**

**1.** Dispositif pour reconnaître un risque de collision entre au moins deux objets qui se déplacent l'un par rapport à l'autre, dans lequel sur chaque objet sont agencés un agencement émetteur pour émettre un rayonnement optique dans la gamme infrarouge ou dans la gamme visible dans toutes les directions et un agencement récepteur pour ce rayonnement optique, **caractérisé en ce que** :

- l'agencement récepteur agencé sur chaque objet est constitué par au moins deux récepteurs planaires pour chaque quadrant du système de coordonnées, lesquels sont disposés sous un certain angle l'un par rapport à l'autre,
- sur chaque objet est prévue une commande qui active l'agencement récepteur à des intervalles temporels, et
- sur chaque objet est prévu un processeur de signaux qui, en se basant sur les signaux reçus de l'agencement de réception et sur leur caractéristique de réception, calcule la distance des objets et l'angle de position des objets, et, si l'angle de position est constant dans le temps mais que la distance des objets diminue, génère un signal de collision,
- le rayonnement optique émis par l'agencement émetteur d'un objet (F1) est reçu et exploité par l'agencement récepteur de l'autre objet (F2)

**2.** Dispositif selon la revendication 1, **caractérisé en ce que** l'agencement émetteur et le récepteur de l'agencement récepteur ont chacun des caractéristiques de forme circulaire ou sphérique.

3. Dispositif selon la revendication 1 ou 2, **caractérisé en ce que** les agencements émetteurs sont constitués par des diodes électroluminescentes et les agencements récepteurs sont constitués par des photodiodes.

4. Dispositif selon l'une des revendications 1 à 3, **caractérisé par** un faible intervalle de cycle d'activation pour l'agencement émetteur.

5. Dispositif selon la revendication 4, **caractérisé en ce que** l'intervalle de cycle d'activation est d'environ 5 %.

_Fig. 1_

_Fig. 2_

Fig. 3

EP 1 249 711 B1

J = const

Fig.4

Fig.5

J = const

LED / LD

Fig. 6

FD2   FD 1

FD3

FD4

a)

FD1...4

b)

Fig. 7

a)

t →

b)

_Fig. 8_

+

$u_{1..4}$

_Fig. 9_